# EUROPEAN PATENT APPLICATION

(11) **EP 4 151 095 A1**
(43) Date of publication of application: **22.03.2023**
(21) Application number: 21805024.3
(22) Date of filing: 12.05.2021
(51) Int. Cl.: A23G 1/00, A23G 1/04

(54) **CHOCOLATE FOOD PRODUCT, METHOD FOR MANUFACTURING CHOCOLATE FOOD PRODUCT, AND DEVICE FOR MANUFACTURING CHOCOLATE FOOD PRODUCT**

(30) Priority: 15.05.2020 JP 2020086360
(71) Applicant: Taniguchi Co., Ltd, Osaka-shi, Osaka, 546-0041 (JP)
(72) Inventor: TANIGUCHI Yoshito, Hidaka-gun, Wakayama 649-1443 (JP)
(74) Representative: Isarpatent
(86) International application number: PCT/JP2021/018008
(87) International publication number: WO 2021/230278

(57) **Abstract**

The present invention provides a tubular chocolate food product, which is highly decorative, has easily changeable inner diameter, outer diameter, and thickness, and is also capable of having a function as a straw. This tubular chocolate food product 100 comprises a tubular body 10 formed of a chocolate layer 20 continuously formed from an inner surface 30 as a surface inside to an outer surface 40 as a surface outside, and an opening 50 formed to penetrate the tubular body 10 from a first end portion 11 as one end portion to a second end portion 12 as the other end portion.

## Description

### TECHNICAL FIELD

The present invention relates to a tubular chocolate food product, a tubular chocolate food product manufacturing method, and a tubular chocolate food product manufacturing device.

### BACKGROUND ART

Typically, various chocolate food products have been developed using chocolate as a material. As the chocolate food products, an edible decoration used for decorating, e.g., a cake or a dessert and an edible decoration having a function as a straw for drinking a beverage have been known, for example.

For example, Japanese Unexamined Utility Model Application Publication No. S61-186385 discloses a chocolate straw formed in such a manner that chocolate in a thin plate shape is wound into a tubular shape. Moreover, Japanese Unexamined Utility Model Application Publication No. S61-29272 discloses a straw that is formed of food such as a cookie or a biscuit and has inner and outer surfaces covered with chocolate.

Use of a tubular chocolate food product as a straw allows not only decoration of a beverage, but also substitution for a plastic straw. Accordingly, the amount of the plastic straw used can be reduced, and the amount of plastic waste can be reduced.

Further, the tubular chocolate food product can be used as an edible decoration for decorating not only a beverage but also a cake and a dessert, for example.

### CITATION LIST

### PATENT DOCUMENT

Patent Document 1: Japanese Unexamined Utility Model Application Publication No. S61-186385
Patent Document 2: Japanese Unexamined Utility Model Application Publication No. S61-29272

### SUMMARY OF THE INVENTION

### TECHNICAL PROBLEM

However, the chocolate straw disclosed in Japanese Unexamined Utility Model Application Publication No. S61-186385 is formed in such a manner that the chocolate in the thin plate shape is wound into the tubular shape. Accordingly, the chocolate is easily peeled off or a gap is easily generated between thin plates of the wounded chocolate when the chocolate is used as the straw, leading to a fear in that air or a beverage leaks through the gap upon use. Further, there is also a problem that the chocolate straw has surface asperities and such a straw is difficult to be used.

Moreover, the chocolate straw disclosed in Japanese Unexamined Utility Model Application Publication No. S61-186385 requires a number of steps for winding the thin plate-shaped chocolate. In the case of manufacturing a thick chocolate straw, the number of times of winding increases, leading to a problem that a greater number of steps is required.

In addition, the chocolate straw disclosed in Japanese Unexamined Utility Model Application Publication No. S61-186385 has a problem that it is difficult to change the inner diameter, outer diameter, and thickness of the straw. For example, although the thickness of the chocolate straw can be increased in such a manner that the thickness of the plate-shaped chocolate is increased and such chocolate is wound into the tubular shape, it is difficult to curve the plate-shaped chocolate, and therefore, it is difficult to manufacture a small-diameter chocolate straw.

The chocolate straw disclosed in Japanese Unexamined Utility Model Application Publication No. S61-29272 is formed in such a manner that the inner and outer surfaces of the straw made of the food such as a cookie or a biscuit are covered with the chocolate, leading to a problem that it is difficult to change the inner diameter, outer diameter, and thickness of the straw. Particularly, it is difficult to decrease the diameter and thickness of the chocolate straw.

The present invention has been made in view of the above-described problems, and an object thereof is to provide: a tubular chocolate food product, which is highly decorative, has easily changeable inner diameter, outer diameter, and thickness, and is also capable of having a function as a straw; a method for manufacturing the tubular chocolate food product; and a device for manufacturing the tubular chocolate food product.

### SOLUTION TO THE PROBLEM

The chocolate food product of the present invention is
a tubular chocolate food product including
a tubular body formed of a chocolate layer continuously formed from an inner surface as a surface inside to an outer surface as a surface outside, and
an opening formed so as to penetrate the tubular body from a first end portion as one end portion to a second end portion as the other end portion.

The chocolate food product manufacturing method of the present invention is a chocolate food product manufacturing method including
preparing a bar-shaped mold made of a material having stretchability,
applying molten chocolate around the mold,
hardening the chocolate applied around the mold,
stretching the mold with both ends of the mold supported such that the chocolate applied to the mold is slidable on the mold, and
separating the chocolate and the mold from each other.

The chocolate food product manufacturing device of the present invention is a chocolate food product manufacturing device including
a mold holder that has a bar-shaped mold made of a material having stretchability, the bar-shaped mold including a first mold end portion as one end portion that is a fixed end and a second mold end portion as the other end portion that is a free end,
an applier that applies molten chocolate around the mold,
a cooler that hardens the chocolate applied around the mold,
a stretching deformer that stretches the mold in an axial direction of the mold by gripping a second mold end portion side of the mold to which the chocolate has been applied, and
a separator that separates the chocolate from the mold.

### ADVANTAGES OF THE INVENTION

According to the chocolate food product of the present invention, the tubular chocolate food product can be provided, which is highly decorative, has the easily changeable inner diameter, outer diameter, and thickness, and is capable of having the function as the straw.

According to the chocolate food product manufacturing method of the present invention, the tubular chocolate food product can be manufactured, which is highly decorative, has the easily changeable inner diameter, outer diameter, and thickness, and is capable of having the function as the straw.

According to the chocolate food product manufacturing device of the present invention, the tubular chocolate food product can be manufactured, which is highly decorative, has the easily changeable inner diameter, outer diameter, and thickness, and is capable of having the function as the straw.

### BRIEF DESCRIPTION OF THE DRAWINGS

FIG. 1 is a front view of a chocolate food product of a first embodiment of the present invention.
FIG. 2 is a cross-sectional view taken along line A-A in FIG. 1.
FIG. 3A is a cross-sectional view of a chocolate food product of a variation.
FIG. 3B is a cross-sectional view of a chocolate food product of the variation.
FIG. 3C is a cross-sectional view of a chocolate food product of the variation.
FIG. 4 is a flowchart showing a chocolate food product manufacturing process.
FIG. 5 is a view showing the chocolate food product manufacturing process.
FIG. 6 is a view showing the chocolate food product manufacturing process.
FIG. 7 is a schematic view of a chocolate food product manufacturing device.
FIG. 8A is a schematic view showing part of the chocolate food product manufacturing device.
FIG. 8B is a schematic view showing part of the chocolate food product manufacturing device.
FIG. 9A is a schematic view showing part of the chocolate food product manufacturing device.
FIG. 9B is a schematic view showing part of the chocolate food product manufacturing device.
FIG. 10 is a schematic view showing part of the chocolate food product manufacturing device.
FIG. 11A is a schematic view showing part of the chocolate food product manufacturing device.
FIG. 11B is a schematic view showing part of the chocolate food product manufacturing device.
FIG. 12A is a schematic view showing part of the chocolate food product manufacturing device.
FIG. 12B is a schematic view showing part of the chocolate food product manufacturing device.
FIG. 13A is a schematic view showing part of the chocolate food product manufacturing device.
FIG. 13B is a schematic view showing part of the chocolate food product manufacturing device.
FIG. 14A is a schematic view showing part of the chocolate food product manufacturing device.
FIG. 14B is a schematic view showing part of the chocolate food product manufacturing device.
FIG. 15A is a schematic view showing the configuration of an applier in a chocolate food product manufacturing device of a second embodiment of the present invention.
FIG. 15B is a schematic view showing the configuration of the applier in the chocolate food product manufacturing device of the second embodiment of the present invention.

### DESCRIPTION OF EMBODIMENT

A chocolate food product of one embodiment of the present invention is
a tubular chocolate food product including
a tubular body formed of a chocolate layer continuously formed from an inner surface as a surface inside to an outer surface as a surface outside, and
an opening formed to penetrate the tubular body from a first end portion as one end portion to a second end portion as the other end portion (a first configuration).

According to the above-described configuration, the tubular body is formed of the chocolate layer continuously formed from the inner surface to the outer surface. The inner diameter, outer diameter, and thickness of the chocolate layer are changed so that highly decorative chocolate food products having various inner diameters, outer diameters, and thicknesses can be provided.

In addition, the chocolate layer of the tubular body is continuously formed from the inner surface to the outer surface. Accordingly, a gap is less likely to be caused, and there is no fear in that air or a beverage leaks in the case of use as a straw.

Thus, the tubular chocolate food product can be provided, which is highly decorative, has easily changeable inner diameter, outer diameter, and thickness, and is also capable of having a function as a straw.

In the first configuration,
the inner surface of the tubular body may have
a molded surface as a surface molded with a mold (a second configuration).

According to the above-described configuration, the inner surface of the tubular body has the molded surface molded with the mold.

Thus, the inner surface of the tubular body is smooth, and the tubular body is easily used as a straw.

In the first or second configuration,
the outer surface of the tubular body may have
a non-molded surface as a surface hardened from a molten state without being molded with a mold (a third configuration).

According to the above-described configuration, the tubular body has the non-molded surface hardened from the molten state without being molded with the mold.

Thus, the chocolate food product can be highly decorative.

In any one of the first to third configurations,
the chocolate layer may be
formed in such a manner that molten chocolate is applied multiple times (a fourth configuration).

According to the above-described configuration, the chocolate layer is formed in such a manner that the molten chocolate is applied multiple times.

Thus, the thickness of the chocolate layer can be increased.

In any one of the first to fourth configurations,
the tubular body may have
a decoration provided on the inner surface and/or the outer surface and made of an edible material (a fifth configuration).

According to the above-described configuration, the tubular body has the decoration provided on the inner surface and/or the outer surface and made of the edible material.

Thus, the chocolate food product can be highly decorative.

A chocolate food product manufacturing method according to one embodiment of the present invention includes
preparing a bar-shaped mold made of a material having stretchability,
applying molten chocolate around the mold,
hardening the chocolate applied around the mold,
stretching the mold with both ends of the mold supported such that the chocolate applied to the mold is slidable on the mold, and
separating the chocolate and the mold from each other (a sixth configuration).

According to the above-described configuration, the chocolate food product manufacturing method includes stretching the mold with both ends of the mold supported such that the chocolate applied to the mold is slidable on the mold. By this step, the chocolate which is difficult to be demolded in the hardened state due to close contact with the mold can be easily demolded from the mold, and the chocolate and the mold can be separated from each other while damage of the chocolate is reduced.

Thus, the tubular chocolate food product can be manufactured, which is highly decorative, has the easily changeable inner diameter, outer diameter, and thickness, and is also capable of having the function as the straw.

In the sixth configuration,
applying the molten chocolate around the mold may include
dipping the mold in the molten chocolate (a seventh configuration).

According to the above-described configuration, the chocolate food product manufacturing method includes dipping the mold in the molten chocolate.

Thus, the molten chocolate can be easily applied around the mold.

In the sixth or seventh configuration,
applying the molten chocolate around the mold may include
discharging, dropping, or spraying the molten chocolate such that the chocolate contacts the mold (an eighth configuration).

According to the above-described configuration, the chocolate food product manufacturing method includes discharging, dropping, or spraying the molten chocolate such that the chocolate contacts the mold.

Thus, the molten chocolate can be easily applied around the mold.

In any one of the sixth to eighth configurations,
applying the molten chocolate around the mold may be performed multiple times (a ninth configuration).

According to the above-described configuration, applying the molten chocolate around the mold is performed multiple times.

Thus, the thickness of the chocolate can be increased.

In any one of the sixth to ninth configurations,
stretching the mold with both ends of the mold supported such that the chocolate applied to the mold is slidable on the mold may include
removing part of the chocolate covering a tip end portion of the mold, and
gripping the tip end portion of the mold exposed after removal of the chocolate (a tenth configuration).

According to the above-described configuration, in the case of stretching the mold with both ends of the mold supported, part of the chocolate covering the tip end portion of the mold is removed in advance, and the mold is stretched with the tip end portion, which is exposed after removal of the chocolate, of the mold gripped.

Thus, the mold can be stretched with both ends of the mold supported while damage of the chocolate is reduced.

In any one of the sixth to ninth configurations,
stretching the mold with both ends of the mold supported such that the chocolate applied to the mold is slidable on the mold may include
gripping the a end portion of the mold with the chocolate covering the tip end portion of the mold (an eleventh configuration).

According to the above-described configuration, in the case of stretching the mold with both ends of the mold supported, the tip end portion of the mold is gripped with the chocolate covering the tip end portion of the mold, and the mold is stretched in this state.

By gripping the mold through the chocolate, the mold can be stretched such that the chocolate at the gripped portion and the chocolate at the non-gripped portion are separated from each other. Accordingly, stretching the mold with both ends of the mold supported can be quickly performed.

In any one of the sixth to eleventh configurations,
the method may further include providing a decoration made of an edible material to an outer surface of the chocolate applied to the mold (a twelfth configuration).

According to the above-described configuration, the decoration made of the edible material is provided to the outer surface of the chocolate food product.

Thus, the chocolate food product can be highly decorative.

A chocolate food product manufacturing device according to one embodiment of the present invention includes
a mold holder that has a bar-shaped mold made of a material having stretchability, the bar-shaped mold including a first mold end portion as one end portion that is a fixed end and a second mold end portion as the other end portion that is a free end,
an applier that applies molten chocolate around the mold,
a cooler that hardens the chocolate applied around the mold,
a stretching deformer that stretches the mold in an axial direction of the mold by gripping a second mold end portion side of the mold to which the chocolate has been applied, and
a separator that separates the chocolate from the mold (a thirteenth configuration).

According to the above-described configuration, the stretching deformer stretches the mold in the axial direction of the mold by gripping the second mold end portion side of the mold to which the chocolate has been applied. Thus, the chocolate that is difficult to be demolded due to contact with the mold can be easily demolded from the mold, and the chocolate and the mold can be separated from each other while damage of the chocolate is reduced.

Thus, the tubular chocolate food product can be manufactured, which is highly decorative, has the easily changeable inner diameter, outer diameter, and thickness, and is also capable of having the function as the straw.

In the thirteenth configuration, the applier may include
a dipper that has a chocolate tank that stores the molten chocolate and dips, from the second mold end portion side, the mold in the chocolate stored in the chocolate tank (a fourteenth configuration).

According to the above-described configuration, the applier includes the dipper, and the dipper dips the mold held by a mold holder in the molten chocolate in the chocolate tank. In this manner, many molds can be simultaneously used, and the chocolate can be applied to these molds.

In the thirteenth or fourteenth configuration,
the applier may
discharge, drop, or spray the molten chocolate such that the chocolate contacts the mold (a fifteenth configuration).

According to the above-described configuration, the applier discharges, drops, or sprays the molten chocolate such that the chocolate contacts the mold.

In this manner, many molds can be simultaneously used, and the chocolate can be applied to these molds.

### [First Embodiment]

Hereinafter, a chocolate food product 100 of an embodiment of the present invention will be described in detail with reference to the drawings. In the figures, the same reference numerals are used to represent the same or equivalent elements, and description thereof will not be repeated. Note that for the sake of simplicity in description, configurations are simply or schematically shown or some components are omitted in the drawings referred below. In addition, dimensional ratios among components shown in each figure do not always indicate actual dimensional ratios. Exemplified dimensions are merely examples, and the present invention are not limited to these exemplified dimensions.

In the figures below, an arrow U indicates an upward direction, and an arrow D indicates a downward direction. An arrow F indicates a front direction, and an arrow B indicates a back direction. An arrow R indicates a right direction, and an arrow L indicates a left direction.

### [Overall Configuration]

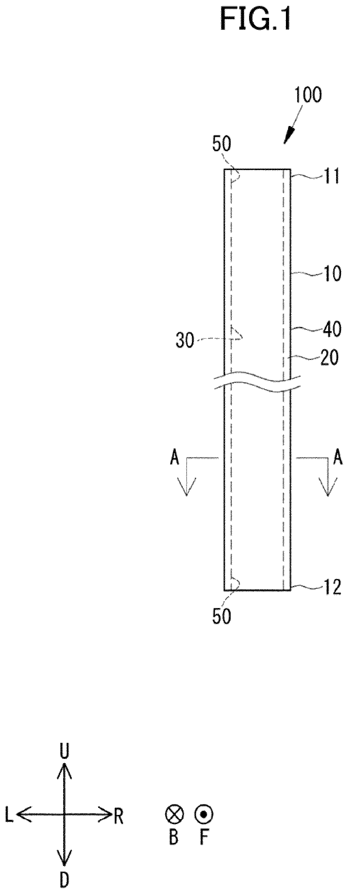

First, an overall configuration of the chocolate food product 100 will be described. FIG. 1 is a front view of the chocolate food product 100 according to the embodiment of the present invention. FIG. 1 shows a state when the chocolate food product 100 is arranged in an up-down direction. The chocolate food product 100 of the present embodiment has a function as a decoration for decorating, e.g., a cold beverage when such a beverage is provided, and also has a function as a straw for drinking the beverage.

Chocolate as a raw material of the chocolate food product 100 is obtained in such a manner that main raw materials such as cacao mass, sugar, and cocoa butter are blended and, as necessary, an additive such as vegetable oil is blended. Chocolate dough and chocolate-based dough defined in "Fair Competition Code for Labeling of Chocolates" (Chocolate and Cocoa Association of Japan) or an oil-and-fat processed food product may be used, but the raw material is not limited to above as long as those skilled in the art can normally use the raw material as chocolate dough. Further, in foreign countries where the present application is effective, those meeting standards regarding the chocolate raw material in these countries may be used, but the raw material is not limited to above as long as those skilled in the art in the countries normally uses the raw material as chocolate dough.

As shown in FIG. 1, the chocolate food product 100 includes a tubular body 10 and an opening 50.

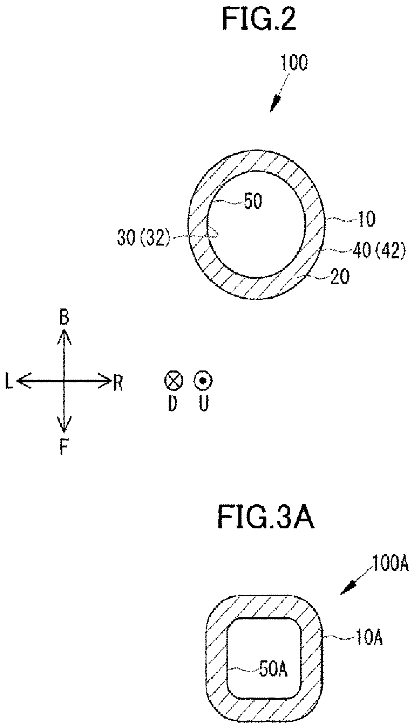

The tubular body 10 is a tubular body having a circular cross-sectional shape (see FIG. 2), and is formed of a chocolate layer 20 continuously formed from an inner surface 30 as a surface inside to an outer surface 40 as a surface outside. Assuming that one end portion is a first end portion 11 and the other end portion is a second end portion 12, the outer diameter of the tubular body 10 of the present embodiment is substantially constant from the first end portion 11 to the second end portion 12.

The opening 50 is formed so as to penetrate the tubular body 10 from the first end portion 11 to the second end portion 12. The cross-sectional shape of the opening 50 is a circular shape (see FIG. 2). The inner diameter of the tubular body 10 of the present embodiment is substantially constant from the first end portion 11 to the second end portion 12.

End surfaces of the first end portion 11 and the second end portion 12 are cut surfaces due to length alignment or shaping.

FIG. 2 is a cross-sectional view taken along line A-A in FIG. 1. As shown in FIG. 2, in the tubular body 10 of the present embodiment, the cross-sectional shape of the inner surface 30 is a circular shape, and the cross-sectional shape of the outer surface 40 is a circular shape. The thickness of the chocolate layer 20 of the present embodiment is substantially constant in a circumferential direction and from the first end portion 11 to the second end portion 12. The chocolate layer 20 is formed such that the chocolate is continuously provided from the inner surface 30 to the outer surface 40.

The inner surface 30 has a molded surface 32 that is a surface molded with a mold. In the present embodiment, the entirety of the inner surface 30 is the molded surface 32.

The outer surface 40 has a non-molded surface 42 that is a surface hardened from a molten state without being molded with a mold. In the present embodiment, the entirety of the outer surface 40 is the non-molded surface 42. The outer surface 40 may be coated with, e.g., an additive (e.g., shellac) for improving thermal resistance or forming the chocolate with glossy texture, or may be provided with a decoration such as a printed edible decoration or a topping.

In a case where the printed decoration is provided on the outer surface 40, it is possible to use: a technique in which an edible printing film is bonded to the outer surface 40 before the outer surface 40 is hardened, the decoration is then transferred to the outer surface 40, and the film is removed after the outer surface 40 has been hardened; or a technique in which the decoration with edible ink is printed by inkjet after the outer surface 40 has been hardened. In a case where the topping is provided on the outer surface 40, it is possible to use: a technique of attaching the topping to the outer surface 40 in a slightly-molten state; or a technique of bonding the topping with another edible material (chocolate may be used), which functions as an adhesive, after the outer surface 40 has been hardened.

The length, inner diameter, outer diameter, thickness, and cross-sectional shape of the chocolate food product 100 may be changed as necessary according to use application or function. In a case where the chocolate food product 100 has the function as the decoration for decorating the beverage (e.g., iced cafe latte) as well as the function as the straw for drinking the beverage, the chocolate food product 100 may have, for example, a tubular body 10 with a length of about 200 mm, an inner diameter of about 6 mm, an outer diameter of about 8 mm, and a thickness of about 1 mm. In a case where the beverage includes a granular substance such as a tapioca ball, the chocolate food product 100 may have such length and inner diameter that a user can suck the granular substance.

Although the cross-sectional shape of the tubular body 10 is substantially constant from the first end portion 11 to the second end portion 12, the cross-sectional shape of the tubular body 10 may be varied from the first end portion 11 to the second end portion 12. For example, the tubular body 10 may be formed such that the thickness on the second end portion 12 side is greater than the thickness on the first end portion 11 side.

In a case where the chocolate food product 100 does not have the function as the straw and is used as an edible decoration for decorating, e.g., a cake or a dessert, the length, inner diameter, outer diameter, thickness, and cross-sectional shape of the chocolate food product 100 may be changed as necessary. For example, the outer diameter of the chocolate food product 100 is set to about 50 mm, and such a chocolate food product 100 is sliced in rounds. In this manner, a ring-shaped decoration can be formed.

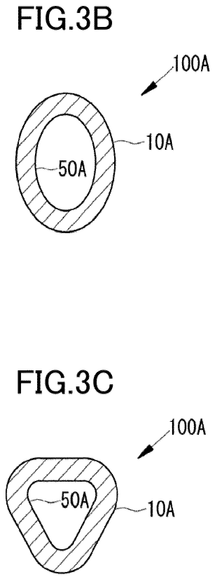

The cross-sectional shape of the chocolate food product 100 is not limited to the circular shape. For example, the cross-sectional shapes of a tubular body 10A and an opening 50A of a chocolate food product 100A of a variation may be a substantially rectangular shape as shown in FIG. 3A, an oval shape as shown in FIG. 3B, or a substantially triangular shape as shown in FIG. 3C.

The chocolate food product 100 is not limited to a linear shape, and may be deformed. For example, the chocolate food product 100 may be made to be curved upon or after molding.

### [Manufacturing Method]

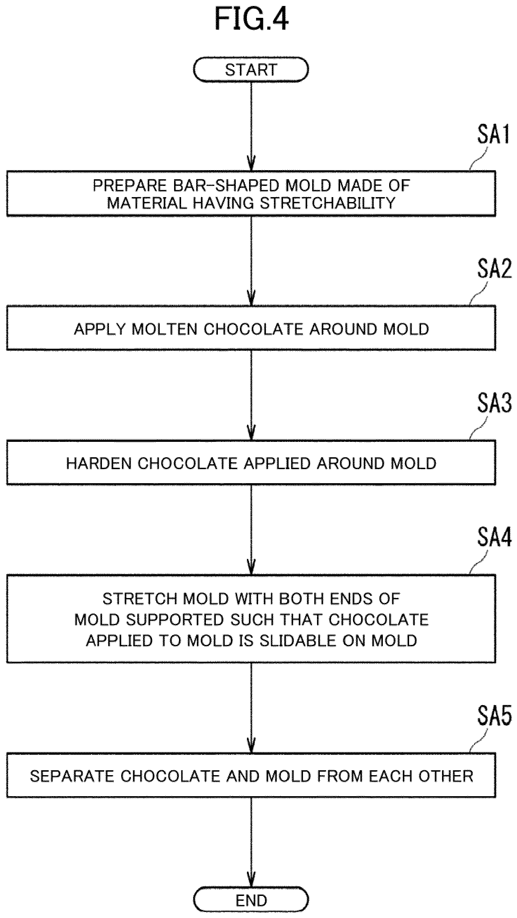

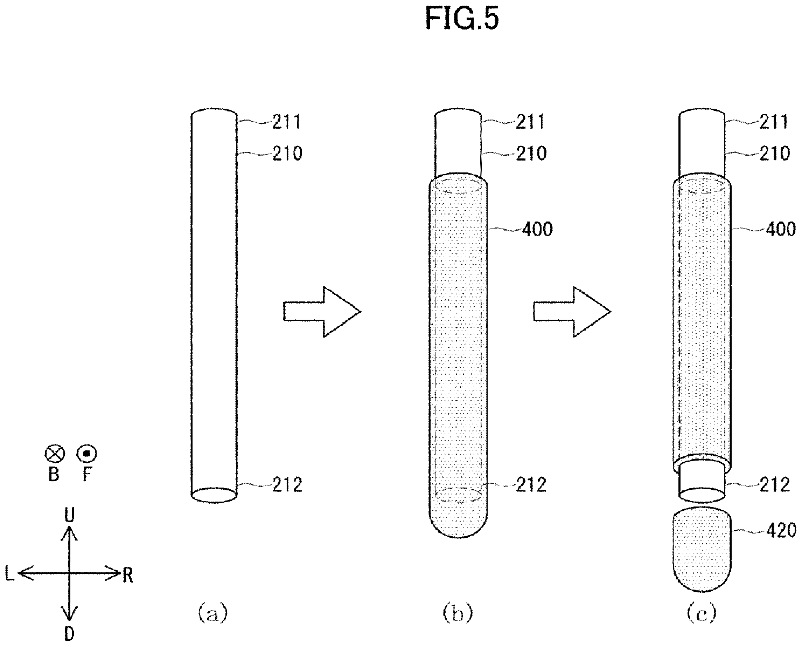

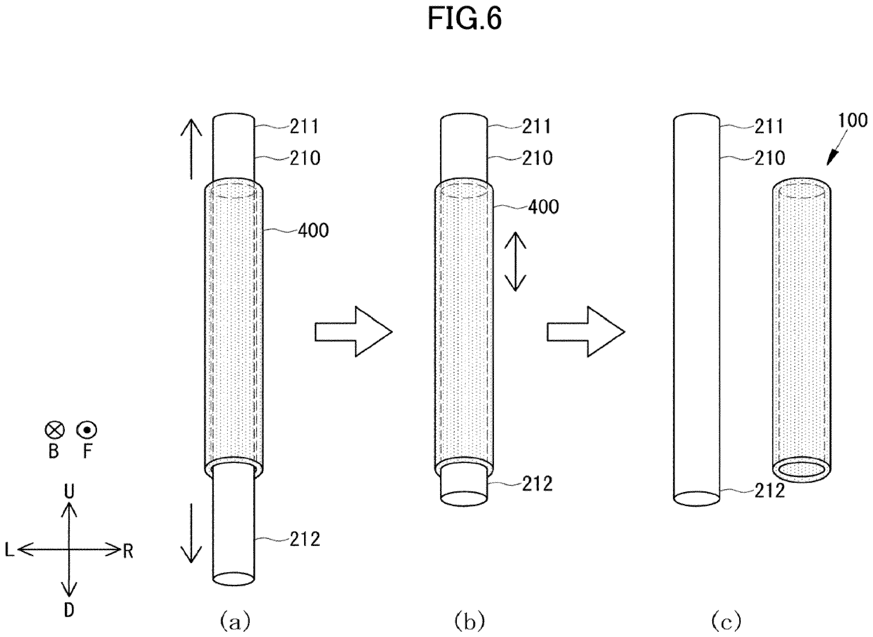

Next, a chocolate food product manufacturing method of the embodiment of the present invention will be described. FIG. 4 is a flowchart showing a chocolate food product manufacturing process. FIGS. 5 and 6 are views each showing the chocolate food product manufacturing process.

As shown in FIG. 4, when the chocolate food product manufacturing process is started (START), a bar-shaped mold 210 made of a material having stretchability is first prepared in Step SA1 (see an illustration (a) of FIG. 5). As the material having the stretchability, silicon resin having passed a food sanitation test may be selected, for example. The tubular chocolate food product 100 is to be formed around the bar-shaped mold 210. Therefore, as the bar-shaped mold 210, one which is longer than the chocolate food product 100 and corresponds to the inner diameter of the chocolate food product 100 is selected.

In Step SA2, molten chocolate 400 is applied around the mold 210 (see an illustration (b) of FIG. 5). Applying the molten chocolate 400 around the mold 210 may include, for example, dipping the mold 210 from one end portion (a second mold end portion 212) in the chocolate 400 melted by heating. For the purpose of, e.g., increasing the thickness of the chocolate layer 20 of the chocolate food product 100, dipping the mold 210 in the molten chocolate 400 may be performed multiple times.

Note that examples of a method for applying the molten chocolate 400 around the mold 210 may include, besides dipping, e.g., a method for applying the chocolate 400 to the mold 210 by spraying. Alternatively, the molten chocolate 400 may be discharged or dropped to form the flow of the chocolate 400, and the molten chocolate 400 may be applied around the mold 210 by contact of the mold 210 with the flow of the chocolate 400. In a case where the mold 210 contacts the flow of the chocolate 400, the mold 210 may be brought close to the flow of the chocolate 400, or conversely, the flow of the chocolate 400 may be brought close to the mold 210. A plurality of application methods may be combined.

In Step SA3, the chocolate 400 applied around the mold 210 is hardened. Step SA3 may be performed with the mold 210 supported in the vertical direction. In this manner, many molds can be simultaneously used, and the chocolate can be hardened with a smooth surface. In order to quickly harden the chocolate 400, it is possible to use a method in which the chocolate 400 is forcibly cooled with cold air.

In Step SA4, the mold 210 is stretched with both ends (a first mold end portion 211 and the second mold end portion 212) of the mold 210 supported, and in this manner, the chocolate 400 applied to the mold 210 becomes slidable on the mold 210 (see illustrations (a) and (b) of FIG. 6).

After the molten chocolate 400 applied to the mold 210 has been hardened due to a decrease in the temperature of the chocolate 400, volume contraction occurs in the chocolate 400, and therefore, the chocolate 400 closely contacts the mold 210 made of, e.g., silicon resin so as to bite into the mold 210. In this close contact state, it is difficult to pull out the mold 210 even when the chocolate 400 and the mold 210 are pulled in opposite directions. Further, a damage of the chocolate 400, such as cracking, is caused due to force application to the chocolate 400.

For these reasons, in the chocolate food product manufacturing method of the present invention, no force is applied to the chocolate 400, and the mold 210 is stretched with both ends (the first mold end portion 211 and the second mold end portion 212) of the mold 210 supported (see the illustration (a) of FIG. 6). By sufficiently stretching the mold 210, the diameter of the mold 210 is reduced across the entirety of the mold 210, and a surface of the mold 210 is separated from the chocolate 400. Thus, the chocolate 400 and the surface of the mold 210 in the close contact state are released from each other. Once the chocolate 400 and the surface of the mold 210 in the close contact state are released from each other, the chocolate 400 is slidable on the mold 210 even after the mold 210 has returned to a natural length state from a stretched state (see the illustration (b) of FIG. 6).

Note that in a state in which the chocolate 400 is applied to the mold 210 (see the illustration (b) of FIG. 5), the chocolate 400 covers a tip end portion (the second mold end portion 212) of the mold 210. Thus, Step SA4 may include removing part (a removal portion 420) of the chocolate 400 covering the tip end portion (the second mold end portion 212) of the mold 210 (see an illustration (c) of FIG. 5) and gripping the tip end portion (the second mold end portion 212) of the mold 210 exposed after removal of part (the removal portion 420) of the chocolate 400. Removing part (the removal portion 420) of the chocolate 400 and gripping the tip end portion (the second mold end portion 212) of the mold 210 may be simultaneously performed.

Alternatively, in Step SA4, gripping the tip end portion (the second mold end portion 212) of the mold 210 with the chocolate 400 covering the tip end portion (the second mold end portion 212) of the mold 210 may be performed. In this case, the chocolate 400 is cracked in the vicinity of the tip end portion (the second mold end portion 212) of the mold 210. However, by cracking of the chocolate 400, part (the removal portion 420) of the chocolate 400 covering the tip end portion (the second mold end portion 212) of the mold 210 is removed so that the mold 210 can be stretched with both ends (the first mold end portion 211 and the second mold end portion 212) of the mold 210 supported.

In Step SA5, the chocolate 400 slidable on the mold 210 is separated from the mold 210 (see an illustration (c) of FIG. 6). In this manner, the chocolate food product 100 of the present invention can be manufactured (END).

Note that a deformed portion such as a curved portion may be made to be formed at the chocolate food product 100 upon or after molding.

In a case where, e.g., the printed decoration or the topping is provided on the surface of the chocolate food product 100, providing, e.g., the printed decoration or the topping on the surface of the chocolate food product 100 may be performed at the same time as a step (Step SA3) of hardening the chocolate 400 applied around the mold 210 or between Step SA3 and Step SA4, or an inkjet or topping step may be performed until packing after the chocolate 400 has been separated from the mold 210 (Step SA5).

In a case where the printed decoration is provided on the surface of the chocolate food product 100, a method in which an edible printing film is bonded to the surface to transfer the decoration to the surface before the surface of the chocolate 400 is hardened may be used in Step SA3, or a method in which the decoration is printed with edible ink by inkjet may be used after Step SA3. In a case where the topping is provided on the surface of the chocolate food product 100, a method in which the topping is attached to the surface of the chocolate 400 in a slightly molten state may be used in Step SA3, or a method in which the topping is bonded to the surface of the hardened chocolate 400 with another edible material (chocolate may be used) functioning as an adhesive may be used after Step SA3.

### [Manufacturing Device]

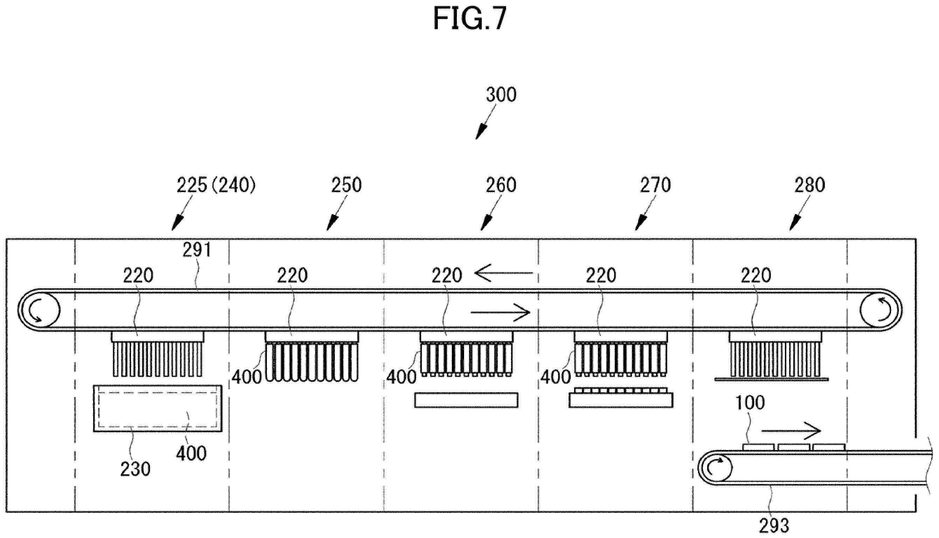

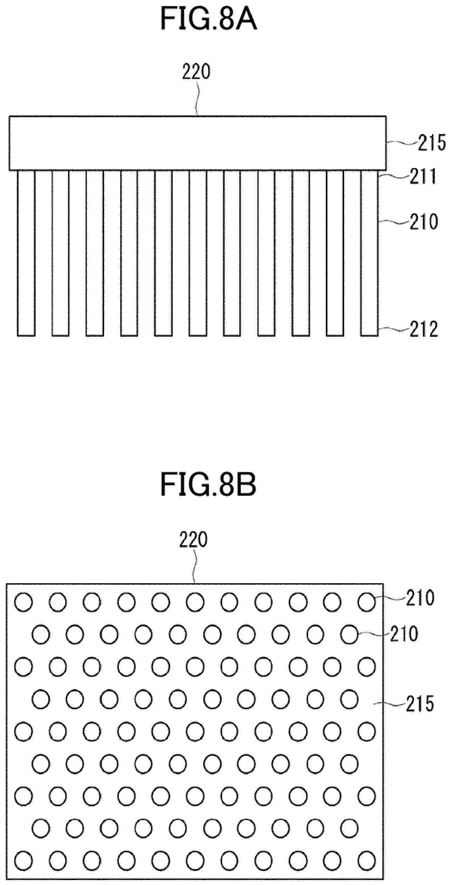

Next, a chocolate food product manufacturing device 300 of the embodiment of the present invention will be described. FIG. 7 is a schematic view of the chocolate food product manufacturing device. FIGS. 8A to 14B are schematic views each showing part of the chocolate food product manufacturing device 300.

As shown in FIG. 7, the manufacturing device 300 includes a mold holder 220, an applier 225 (a dipper 240), a cooler 250, a tip end remover 260, a stretching deformer 270, and a separator 280. The mold holder 220 is, by a delivery device 291, delivered so as to pass through the applier 225 (the dipper 240), the cooler 250, the tip end remover 260, the stretching deformer 270, and the separator 280 in this order. The chocolate food product 100 is manufactured through steps performed for the mold holder 220 by these components.

FIGS. 8A and 8B each show the mold holder 220. FIG. 8A is a side view of the mold holder 220, and FIG. 8B is a bottom view of the mold holder 220. As shown in FIGS. 8A and 8B, the mold holder 220 includes a plurality of molds 210 and a holder 215.

The mold 210 has the bar shape, and is made of the material having the stretchability. As the material having the stretchability, silicon resin having passed the food sanitation test may be selected, for example. The tubular chocolate food product 100 is to be formed around the mold 210, and therefore, one which is longer than the chocolate food product 100 and corresponds to the inner diameter of the chocolate food product 100 is selected as the mold 210.

The holder 215 supports the plurality of molds 210. The plurality of molds 210 is arranged at equal intervals, the first mold end portions 211 are held, and the second mold end portions 212 are free ends. The holder 215 supports the plurality of molds 210 with a longitudinal direction of the mold 210 facing the vertical direction.

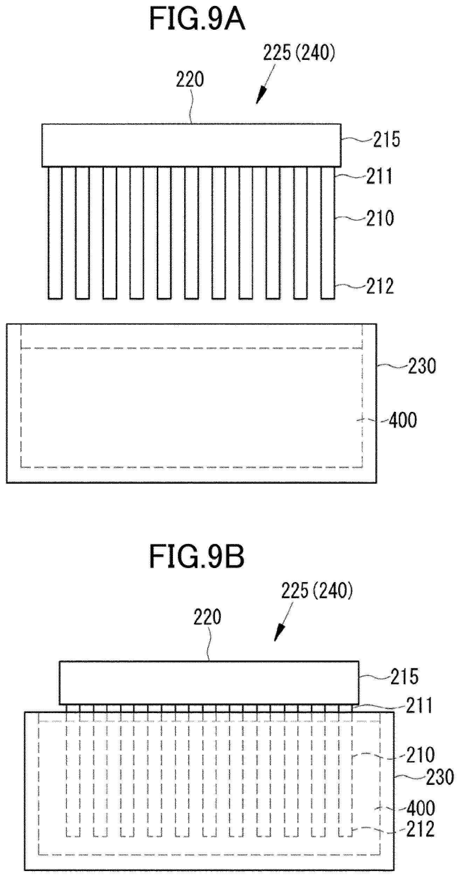

FIGS. 9A and 9B each show the applier 225 (the dipper 240), and the dipper 240 has a chocolate tank 230. FIG. 9A shows a state when the mold holder 220 delivered by the delivery device 291 reaches above the chocolate tank 230 (see FIG. 7).

The chocolate tank 230 stores the molten chocolate 400. The chocolate tank 230 has a heating heat-retention function or a heat-retention function, and can store the chocolate 400 in the molten state.

FIG. 9B shows a state when the plurality of molds 210 supported by the mold holder 220 is dipped in the chocolate 400 stored in the chocolate tank 230. The dipper 240 dips each mold 210 in the chocolate 400 from the second mold end portion 212 side.

The chocolate tank 230 may be movable upward to the molds 210 held by the mold holder 220 in order to dip each mold 210 in the chocolate 400, or the mold holder 220 may be movable downward to the chocolate tank 230 in order to dip each mold 210 in the chocolate 400. In this manner, many molds can be simultaneously used, and the chocolate can be applied to these molds.

In order to increase the thickness of the chocolate 400 applied to the mold 210, the dipper 240 may dip the mold 210 in the chocolate 400, which is stored in the chocolate tank 230, multiple times.

In order to adjust the thickness of the chocolate 400 applied to the mold 210, the viscosity of the chocolate 400 may be changed in such a manner that, e.g., the amount of cocoa butter or vegetable oil is changed.

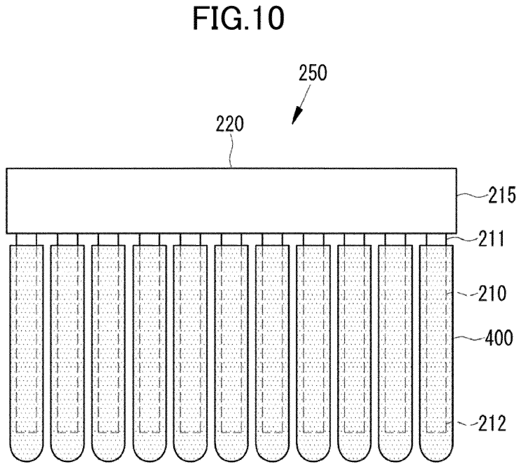

FIG. 10 shows the cooler 250. The mold holder 220 having dipped in the chocolate 400 by the dipper 240 is delivered to the cooler 250, and the chocolate 400 applied around each mold 210 is hardened. In the cooler 250, the chocolate 400 is hardened with each mold 210 supported in the vertical direction. Further, in the cooler 250, the chocolate 400 is forcibly cooled with cold air in order to quickly harden the chocolate 400. Note that the chocolate 400 applied to the mold 210 covers the tip end portion (the second mold end portion 212) of the mold 210.

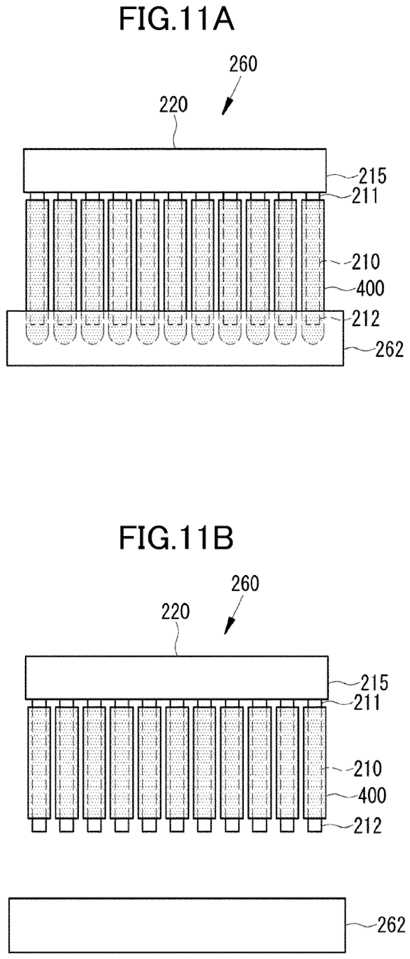

FIGS. 11A and 11B each show the tip end remover 260. The mold holder 220 holding each mold 210 around which the chocolate 400 has been hardened by the cooler 250 is delivered to the tip end remover 260. The tip end remover 260 has a cutter 262.

FIG. 11A shows a state when the cutter 262 is brought close to the tip end portion (the second mold end portion 212) of each mold 210 to remove the chocolate 400 covering the tip end portion (the second mold end portion 212) of the mold 210.

FIG. 11B shows a state when the tip end portion (the second mold end portion 212) of each mold 210 is exposed after part of the chocolate 400 covering the tip end portion (the second mold end portion 212) of each mold 210 has been removed. Since the tip end portion (the second mold end portion 212) of each mold 210 is exposed, the tip end portion (the second mold end portion 212) of each mold 210 is easily supported by the subsequent stretching deformer 270.

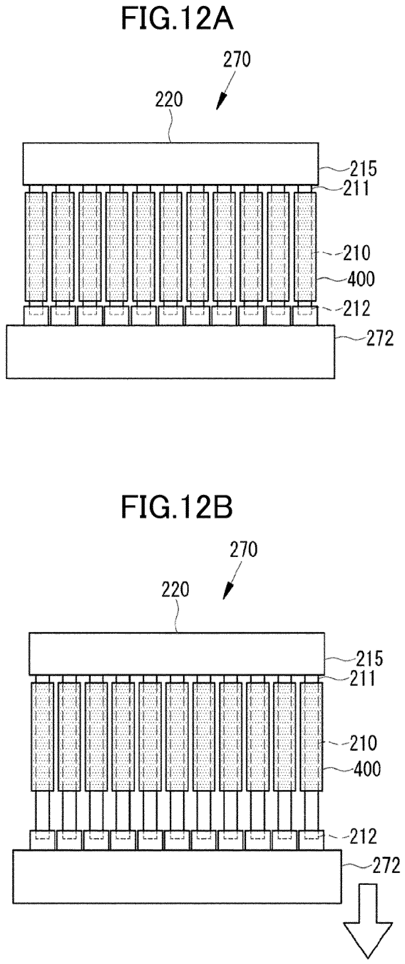

FIGS. 12A to 13B each show the stretching deformer 270. In the stretching deformer 270, each mold 210 is stretched with a support 272 supporting the second mold end portion 212 of each mold 210, and in this manner, the chocolate 400 applied to each mold 210 are slidable on each mold 210.

FIG. 12A shows a state when the support 272 supports the second mold end portion 212 of each mold 210.

FIG. 12B shows a state when each mold 210 is stretched with no force applied to the chocolate 400 after the support 272 has moved downward while supporting the second mold end portion 212 of each mold 210. By sufficiently stretching each mold 210, the diameter of the mold 210 is narrowed across the entirety of the mold 210, and accordingly, the chocolate 400 and the surface of the mold 210 in the close contact state are released from each other.

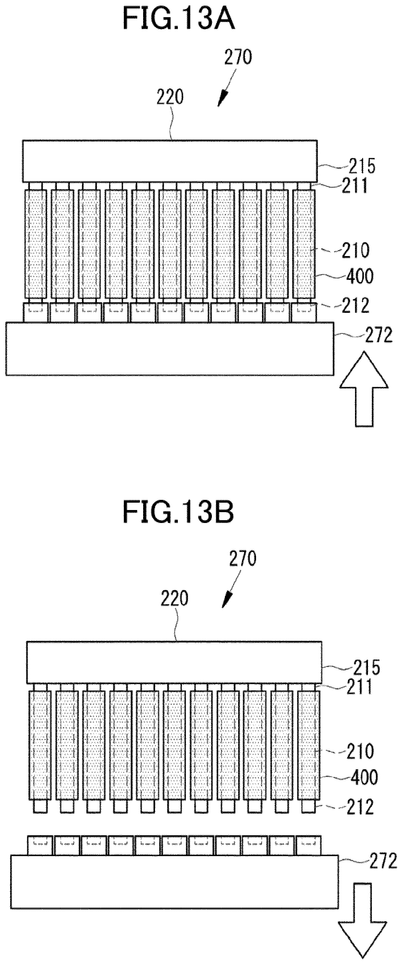

FIG. 13A shows a state when each mold 210 returns to the natural length state from the stretched state after the support 272 has moved upward while supporting the second mold end portion 212 of the mold 210. Once the chocolate 400 and the surface of each mold 210 in the close contact state are released from each other, the chocolate 400 is slidable on each mold 210 even after each mold 210 has returned to the natural length state from the stretched state.

FIG. 13B shows a state when the support 272 is detached from the second mold end portion 212 of each mold 210. Since the chocolate 400 and each mold 210 are in the contact state in this state, the chocolate 400 does not drop from each mold 210.

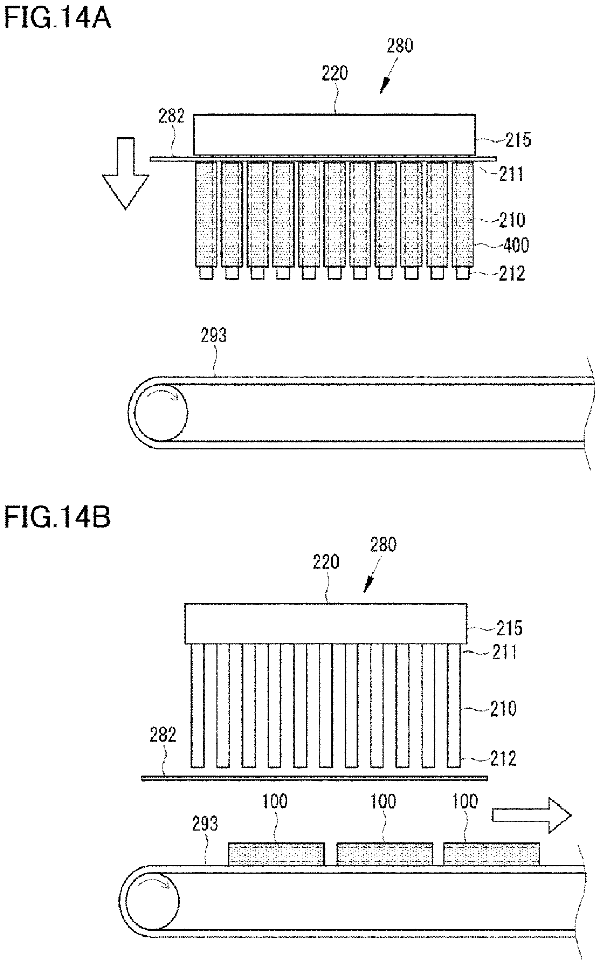

FIGS. 14A and 14B each show the separator 280. The separator 280 separates, from each mold 210, the chocolate 400 slidable on each mold 210. The separator 280 has a separation arm 282. A delivery device 293 that delivers the separated chocolate food products 100 to the outside of the manufacturing device 300 is arranged below the separator 280.

FIG. 14A shows a state when the separation arm 282 is positioned above the chocolate 400 supported on each mold 210.

FIG. 14B shows a state when the separation arm 282 reaches below each mold 210 after the separation arm 282 has moved downward while the chocolate 400 supported on each mold 210 is moved downward. The chocolate 400 supported on each mold 210 is separated from each mold 210 and is formed into the chocolate food products 100, and the chocolate food products 100 are delivered to the outside of the manufacturing device 300 by the delivery device 293.

A step in which the printed decoration or the topping, for example, is provided on the surface of the chocolate food product 100 may be performed until the step in the cooler 250 after applying the chocolate 400 around each mold 210 by the dipper 240, for example. While the chocolate 400 applied around each mold 210 is being hardened or after the chocolate 400 applied around each mold 210 has been hardened, the printed decoration or the topping, for example, may be provided on the surface of each chocolate food product 100. Thus, the chocolate food product can be highly decorative.

In a case where the printed decoration is provided on the surface of the chocolate food product 100, it is possible to use a technique of bonding an edible printing film to the surface to transfer the decoration to the surface in a state in which the film is bondable to the surface of the chocolate 400 between the dipper 240 and the cooler 250. Alternatively, it is possible to use a technique of printing the decoration with edible ink by inkjet after the chocolate 400 applied around the mold 210 has been hardened. In a case where the topping is provided on the surface of the chocolate food product 100, it is possible to use a technique of bonding the topping to the surface of the chocolate 400 in the slightly molten state in the cooler 250. Alternatively, it is possible to use a technique of bonding the topping to the surface of the hardened chocolate 400 with another edible material (chocolate may be used), which functions as an adhesive, after the chocolate 400 applied around the mold 210 has been hardened.

According to the chocolate food product 100 of the present embodiment described above, the tubular chocolate food product can be provided, which is highly decorative, has easily changeable inner diameter, outer diameter, and thickness, and is also capable of having the function as the straw.

According to the chocolate food product manufacturing method and device of the present embodiment, the tubular chocolate food product can be manufactured, which is highly decorative, has easily changeable inner diameter, outer diameter, and thickness, and is also capable of having the function as the straw.

### [Second Embodiment]

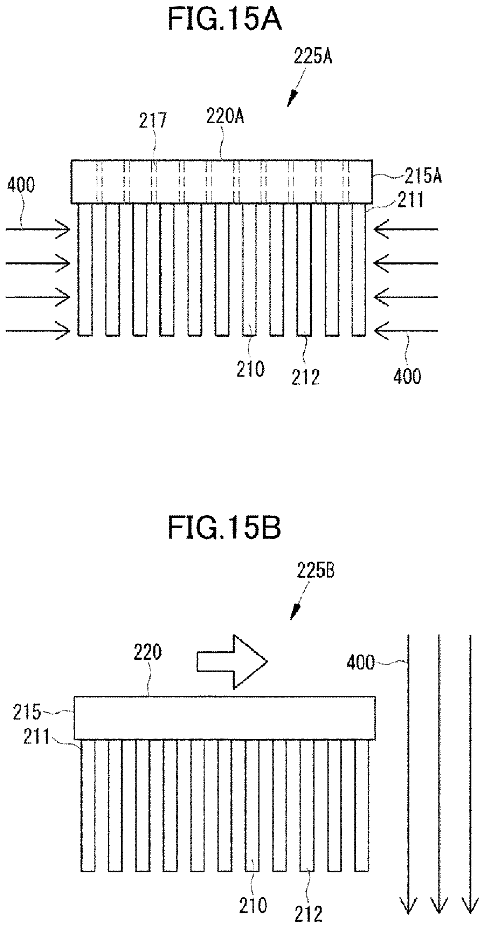

In a second embodiment, the configuration of an applier 225A is different from the configuration of the applier 225 (the dipper 240) of the first embodiment. The applier 225A of the second embodiment discharges, drops, or sprays molten chocolate 400 such that the chocolate 400 contacts a mold 210, thereby applying the chocolate 400 to the mold 210. FIGS. 15A and 15B are schematic views each showing the configuration of the applier in a chocolate food product manufacturing device of the second embodiment of the present invention.

FIG. 15A shows the configuration for applying the chocolate 400 to each mold 210 in such a manner that the chocolate 400 is discharged or sprayed onto each mold 210 from the side of each mold 210 held by a holder 215A of a mold holder 220A such that the chocolate 400 contacts each mold 210. A direction of discharging or spraying the chocolate 400 is not limited to the direction from the side, and may be a direction from below. As shown in FIG. 15A, a plurality of discharge holes 217 may be formed at the holder 215A, and the chocolate 400 may be applied to each mold 210 thereabove in such a manner that the molten chocolate 400 is discharged or sprayed through the discharge holes 217.

FIG. 15B shows the configuration for applying the chocolate 400 to each mold 210 in such a manner that the flow of the chocolate 400 is formed by natural drop of the chocolate 400 through a not-shown discharge port and each mold 210 passes through such a flow. A direction of discharging the chocolate 400 is not limited to the vertical direction, and an obliquely downward flow of the chocolate 400 may be formed in such a manner that the chocolate 400 is discharged obliquely downward. Each mold 210 is moved to the flow of the chocolate 400 in FIG. 15B, but the present invention is not limited to this. For example, the flow of the chocolate 400 may be moved to each mold 210 after movement of each mold 210 has been stopped, or each mold 210 and the flow of the chocolate 400 may be moved in the same direction or the opposite directions.

### [Variations]

The chocolate food product, the chocolate food product manufacturing method, and the chocolate food product manufacturing device according to the present invention are not limited to those described above in the embodiments. For example, the shape and dimensions of the chocolate food product, the shape of the mold 210, etc. are not limited to those of the present embodiments. The above-described embodiments are merely examples for implementing the present invention, the present invention is not limited to the above-described embodiments, and as necessary, modifications may be made to the above-described embodiments without departing from the gist of the present invention.

### INDUSTRIAL APPLICABILITY

The present invention is applicable to a tubular chocolate food product, a tubular chocolate food product manufacturing method, and a tubular chocolate food product manufacturing device.

### DESCRIPTION OF REFERENCE CHARACTERS

- 100: Chocolate Food Product
- 10: Tubular Body
- 11: First End Portion
- 12: Second End Portion
- 20: Chocolate Layer
- 30: Inner Surface
- 40: Outer Surface
- 50: Opening

## Claims

1. A tubular chocolate food product comprising:
a tubular body formed of a chocolate layer continuously formed from an inner surface as a surface inside to an outer surface as a surface outside; and
an opening formed so as to penetrate the tubular body from a first end portion as one end portion to a second end portion as the other end portion.

2. The chocolate food product of claim 1, wherein
the inner surface of the tubular body has
a molded surface as a surface molded with a mold.

3. The chocolate food product of claim 1 or 2, wherein
the outer surface of the tubular body has
a non-molded surface as a surface hardened from a molten state without being molded with a mold.

4. The chocolate food product of any one of claims 1 to 3, wherein
the chocolate layer is
formed in such a manner that molten chocolate is applied multiple times.

5. The chocolate food product of any one of claims 1 to 4, wherein
the tubular body has
a decoration provided on the inner surface and/or the outer surface and made of an edible material.

6. A chocolate food product manufacturing method comprising:
preparing a bar-shaped mold made of a material having stretchability;
applying molten chocolate around the mold;
hardening the chocolate applied around the mold;
stretching the mold with both ends of the mold supported such that the chocolate applied to the mold is slidable on the mold; and
separating the chocolate and the mold from each other.

7. The chocolate food product manufacturing method of claim 6, wherein
applying the molten chocolate around the mold includes
dipping the mold in the molten chocolate.

8. The chocolate food product manufacturing method of claim 6 or 7, wherein
applying the molten chocolate around the mold includes
discharging, dropping, or spraying the molten chocolate such that the chocolate contacts the mold.

9. The chocolate food product manufacturing method of any one of claims 6 to 8, wherein
applying the molten chocolate around the mold is performed multiple times.

10. The chocolate food product manufacturing method of any one of claims 6 to 9, wherein
stretching the mold with both ends of the mold supported such that the chocolate applied to the mold is slidable on the mold includes
removing part of the chocolate covering a tip end portion of the mold, and
gripping the tip end portion of the mold exposed after removal of the chocolate.

11. The chocolate food product manufacturing method of any one of claims 6 to 9, wherein
stretching the mold with both ends of the mold supported such that the chocolate applied to the mold is slidable on the mold includes
gripping a tip end portion of the mold with the chocolate covering the tip end portion of the mold.

12. The chocolate food product manufacturing method of any one of claims 6 to 11, further comprising:
providing a decoration made of an edible material to an outer surface of the chocolate applied to the mold.

13. A chocolate food product manufacturing device comprising:
a mold holder that has a bar-shaped mold made of a material having stretchability, the bar-shaped mold including: a first mold end portion as one end portion that is a fixed end; and a second mold end portion as the other end portion that is a free end
an applier that applies molten chocolate around the mold;
a cooler that hardens the chocolate applied around the mold;
a stretching deformer that stretches the mold in an axial direction of the mold by gripping a second mold end portion side of the mold to which the chocolate has been applied; and
a separator that separates the chocolate from the mold.

14. The chocolate food product manufacturing device of claim 13, wherein
the applier includes
a dipper that has a chocolate tank storing the molten chocolate and dips the mold from the second mold end portion side in the chocolate stored in the chocolate tank.

15. The chocolate food product manufacturing device of claim 13 or 14, wherein
the applier
discharges, drops, or sprays the molten chocolate such that the chocolate contacts the mold.
